# EUROPÄISCHE PATENTSCHRIFT

(11) **EP 2 595 778 B1**
(45) Veröffentlichungstag und Bekanntmachung des Hinweises auf die Patenterteilung: **10.06.2015**
(21) Anmeldenummer: 11735414.2
(22) Anmeldetag: 12.07.2011
(51) Int. Cl.: B23Q 1/00

(54) **NULLPUNKT-SPANNVORRICHTUNG**
ZERO POINT CLAMPING DEVICE
DISPOSITIF DE SERRAGE À POINT ZÉRO

(30) Priorität: 19.07.2010 DE 202010010413 U
(43) Veröffentlichungstag der Anmeldung: 29.05.2013
(73) Patentinhaber: Gressel AG, 8355 Aadorf (CH)
(72) Erfinder: SCHLÜSSEL, Marcel, 8303 Bassersdorf (CH)
(74) Vertreter: Charrier, Rapp & Liebau
(86) Internationale Anmeldenummer: PCT/EP2011/061860
(87) Internationale Veröffentlichungsnummer: WO 2012/010463

(56) Entgegenhaltungen:
- EP-A1- 1 344 599
- EP-A1- 1 595 641
- EP-A2- 1 208 938
- DE-A1- 10 317 338

## Beschreibung

Die Erfindung betrifft eine Nullpunkt-Spannvorrichtung nach dem Oberbegriff des Anspruchs 1 (siehe z.B. EP-1208938).

Derartige Nullpunkt-Spannvorrichtungen werden z.B. zum positionsgenauen Festspannen von Spannsystemen, Paletten oder Werkstücken auf Bearbeitungstischen von Werkzeugmaschinen oder dgl. eingesetzt. Handelsübliche Nullpunktspannsysteme arbeiten in der Regel mit Einzugsbolzen, die in eine Aufnahmeöffnung einer Spannplatte eingeführt und mittels eines Spannmechanismus in die Aufnahmeöffnung eingezogen werden. Um eine genaue Positionierung und Führung mit hoher Wiederholgenauigkeit zu erreichen, müssen die Aufnahmeöffnungen und die entsprechenden Einzugsbolzen jedoch äußerst genau gefertigt und aufeinander abgestimmt sein, was zu Problemen beim Einführen der Einzugsbolzen in die Aufnahmeöffnungen führen kann. Es besteht insbesondere die Gefahr, dass sich der Einzugsbolzen verkantet. Zur Lösung dieser Problematik wurden daher bereits konische Spannflächen vorgeschlagen. Hierbei ergibt sich jedoch das Problem, dass sich die Position in Axialrichtung der Einzugsbolzen abhängig von der Einzugskraft verändern kann.

Aufgabe der Erfindung ist es, eine Nullpunkt-Spannvorrichtung der eingangs genannten Art zu schaffen, die ein einfaches Einfügen des Einzugsbolzens in die Aufnahmeöffnung und dennoch eine exakte und wiederholgenaue Positionierung der Teile ermöglicht.

Diese Aufgabe wird durch eine Vorrichtung mit den Merkmalen des Anspruchs 1 gelöst. Zweckmäßige Weiterbildungen und vorteilhafte Ausführungsformen der Erfindung sind Gegenstand der Unteransprüche.

Dadurch dass Aufnahmeöffnung des zweiten Bauteils einen Einführbereich mit größeren Außenabmessungen als der Einzugsbolzen des ersten Bauteils und einen gegenüber dem Einführbereich radial versetzten Anlagebereich mit mindestens einer in der Draufsicht kreisbogenförmigen Anlagefläche enthält, kann der Einzugsbolzen einfach in die entsprechende Aufnahmeöffnung eingeführt und durch eine seitliche Verschiebung des ersten Bauteils genau positioniert werde Mit der Aufnahme des Einzugsbolzens in der Aufnahmeöffnung und einer seitlichen Verschiebung kann auch ohne aufwändige Verformungen gespannt werden, wobei die Anlage des Einzugsbolzens an der kreisbogenförmigen Anlagefläche innerhalb der Aufnahmeöffnung des zweiten Bauteils eine genau Positionierung in der X- und Y-Achse und eine obere Auflagefläche des zweiten Bauteils eine exakte Positionierung in der Z-Achse ermöglicht. Dadurch sind hohe Haltekräfte ohne Vibrationen der Aufspannung erreichbar. Die Spannvorrichtung weist außerdem eine gute Zugänglichkeit auf und ist einfach bedienbar.

Der Anlagebereich kann eine oder mehrere durch Freistellungen unterteilte Anlageflächen aufweisen. Durch eine Freistellung ist z.B. eine definierte Zweipunktauflage des Einzugsbolzens innerhalb der Aufnahmeöffnung erreichbar.

In einer zweckmäßigen Ausführung weist der Einzugsbolzen einen runden Querschnitt auf und enthält zylindrische äußere Anlageflächen. Der Einzugsbolzen kann aber auch vieleckig ausgeführt sein. Die Aufnahmeöffnung kann in einer fertigungstechnisch vorteilhaften Ausführung in der Draufsicht oval sein, wobei die ovale Aufnahmeöffnung durch zwei Bohrungen mit unterschiedlichem Durchmesser hergestellt werden kann.

Der Spannmechanismus weist vorzugsweise einen quer zur Aufnahmeöffnung verstellbaren Schieber mit einer Keilfläche zum Eingriff mit einer schrägen Spannfläche einer Keilnut des Einzugsbolzens auf. Dadurch kann der Einzugsbolzen nicht nur seitlich an den Anlagebereich angedrückt, sondern auch definiert eingezogen werden.

Weitere Besonderheiten und Vorzüge der Erfindung ergeben sich aus der folgenden Beschreibung eines bevorzugten Ausführungsbeispiels anhand der Zeichnung. Es zeigen:
- **Figuren 1 und 2**: einen Querschnitt und einen Längsschnitt einer Nullpunkt-Spannvorrichtung im gelösten Zustand;
- **Figuren 3 und 4**: einen Querschnitt und einen Längsschnitt einer Nullpunkt-Spannvorrichtung im gespannten Zustand und
- **Figur 5**: ein weiteres Ausführungsbeispiel einer Nullpunkt-Spannvorrichtung.

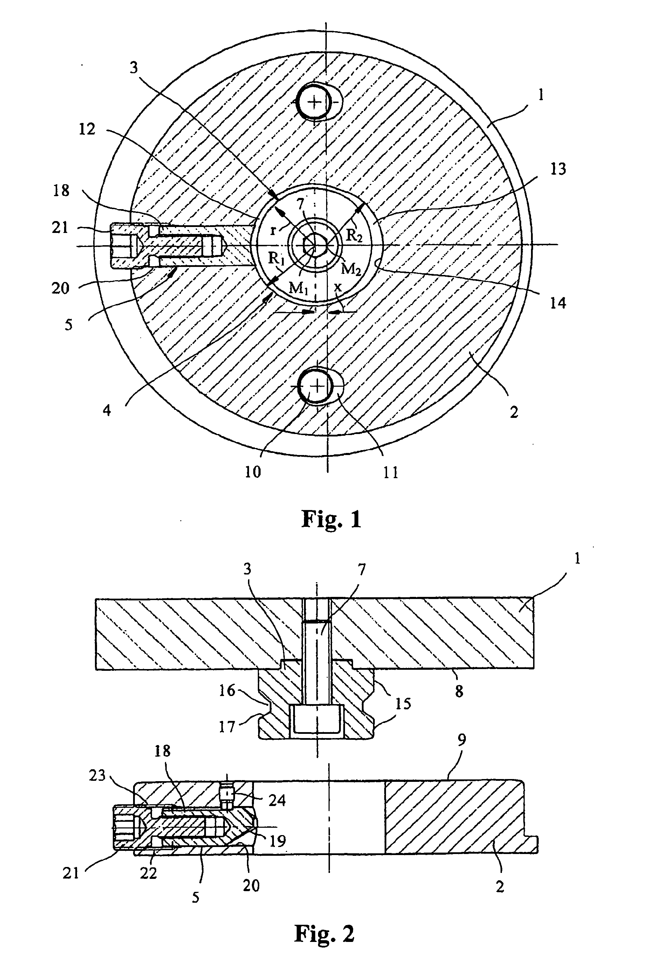

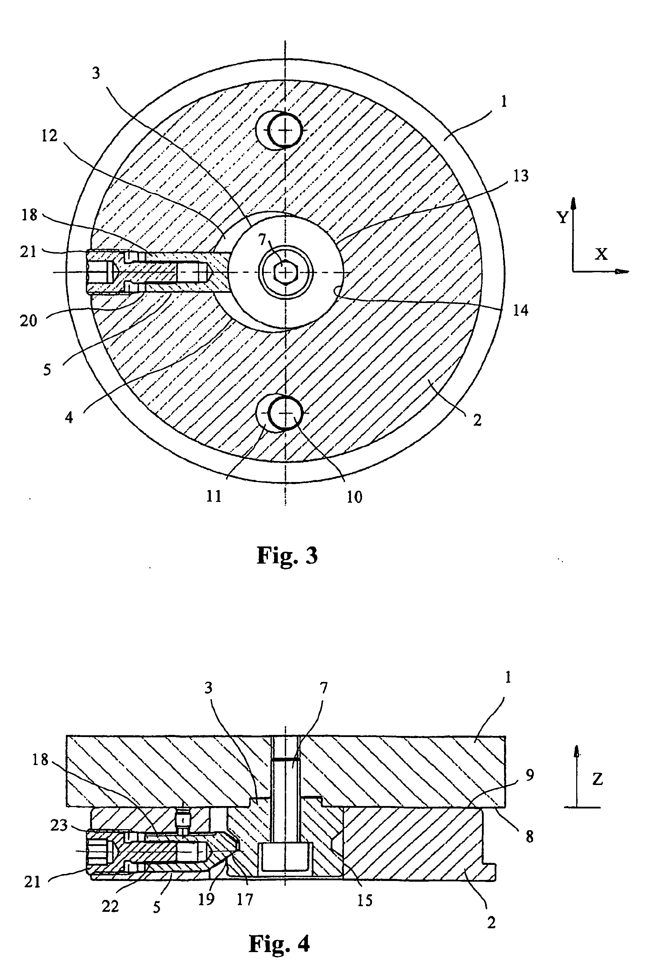

Die in den Figuren 1 und 2 im noch ungespannten Zustand und in den Figuren 3 und 4 im gespannten Zustand dargestellte Nullpunkt-Spannvorrichtung zum positionsgenauen Festspannen eines ersten Bauteils 1 an einem hier als runde Aufspannplatte ausgebildeten zweiten Bauteil 2 enthält einen am ersten Bauteil 1 angeordneten Einzugsbolzen 3, der in eine im zweiten Bauteil 2 vorgesehene Aufnahmeöffnung 4 eingeführt und durch einen im zweiten Bauteil 2 angeordneten Spannmechanismus 5 innerhalb der Aufnahmeöffnung 4 positioniert und in diese eingezogen werden kann.

Wie in Figur 2 gezeigt, weist das erste Bauteil 1 neben dem hier durch eine Schraube 7 an der Unterseite befestigten Einzugsbolzen 3 eine untere Anlagefläche 8 zur Anlage an einer oberen Auflagefläche 9 des zweiten Bauteils 2 auf. Durch die Anlage der unteren Anlagefläche 8 des ersten Bauteils 1 auf der oberen Auflagefläche 9 des als Aufspannplatte ausgebildeten zweiten Bauteils 2 kann die Position des zu spannenden ersten Bauteils 1 in einer ersten Achse (Z-Achse) festgelegt werden. Die untere Auflagefläche 8 kann aber auch als Ringfläche an dem Einzugsbolzen 3 ausgebildet sein. In dem ersten Bauteil 1 sind gemäß Figur 1 außerdem zwei diametral gegenüberliegende, nach unten vorstehende Verdrehsicherungsbolzen 10 zum Eingriff in entsprechende Verdrehsicherungsbohrungen 11 innerhalb des zweiten Bauteils 2 angebracht.

Wie besonders aus Figur 1 hervorgeht, enthält die im zweiten Bauteil 2 angeordnete Aufnahmeöffnung 4 einen Einführbereich 12 mit größeren Außenabmessungen als der Einzugsbolzen 3 und einen gegenüber dem Einführbereich 12 radial versetzten Anlagebereich 13 mit einer in der Draufsicht kreisbogenförmigen Anlagefläche 14. Die Aufnahmeöffnung 4 ist bei der gezeigten Ausführung in der Draufsicht oval ausgebildet und weist im Einführbereich 12 einen gegenüber dem Radius r des Einzugsbolzen 3 größeren Radius R₁ auf. Der Anlagebereich 13 weist dagegen einen an den Radius r des Einzugsbolzens 3 angepassten kleineren Radius R₂ auf. Der Mittelpunkt M₂ des kreisbogenförmigen Anlagebereichs 13 ist gegenüber dem Mittelpunkt M₁ des Einführbereichs 12 um einen Betrag x versetzt. Auf fertigungstechnisch einfache Weise kann die Aufnahmeöffnung 4 aus zwei um den Betrag x versetzen Bohrungen mit unterschiedlichem Durchmesser hergestellt werden. Auch die beiden Verdrehsicherungsbohrungen 11 sind oval mit einem vergrößerten Einführbereich und einen kleineren Anlagebereich ausgeführt und entsprechend der Aufnahmeöffnung 4 ausgerichtet, so dass das der in Querschnitt kreisrunde Einzugsbolzen 3 und die beiden im Querschnitt ebenfalls kreisrunden Verdrehsicherungsbolzen 10 in der gemäß Figur 1 und 2 gezeigten Stellung durch Absenken des ersten Bauteils 1 einfach in die Einführbereiche der Aufnahmeöffnung 4 bzw. der Verdrehsicherungsbohrungen 11 eingeführt werden können. Der Einzugsbolzen 3 enthält gemäß Figur 2 äußere zylindrische Anlageflächen 15 und eine als Keilnut ausgebildete umlaufende Spannnut 16 mit einer unteren Spannfläche 17.

Der Spannmechanismus 5 umfasst einen quer zur Aufnahmeöffnung 4 verstellbaren Schieber 18, der gemäß Figur 2 an seinem in die Aufnahmeöffnung 4 ragenden inneren Ende eine untere, konkave Keilfläche 19 zum Eingriff mit der unteren schrägen Spannfläche 17 des Einzugsbolzens 3 enthält. Der Schieber 18 ist in einer senkrecht zur Aufnahmeöffnung 4 innerhalb des zweiten Bauteils 2 verlaufenden Bohrung 20 verschiebbar geführt und kann durch eine Stellschraube 21 zwischen einer in den Figuren 1 und 2 gezeigten Lösestellung und einer in den Figuren 3 und 4 dargestellten Spannstellung verschoben werden, wobei der Schieber 18 durch eine hier nicht dargestellte Rückstellfeder in die Lösestellung beaufschlagt sein kann. Die Stellschraube 21 kann als Differentialschraube mit zwei Gewinden 22 und 23 unterschiedlicher Steigungen ausgeführt sein. Bei der gezeigten Ausführung ist der Schieber 18 durch eine Sicherungsschraube 24 gegen Verdrehung gesichert innerhalb der Bohrung 20 geführt.

Wenn der Schieber 18 durch Betätigung der Stellschraube 21 aus der in den Figuren 1 und 2 gezeigten Lösestellung in eine in den Figuren 3 und 4 dargestellte Spannstellung verschoben wird und mit seiner konkaven inneren Keilfläche 19 in Eingriff mit der Spannnut 16 des Einzugsbolzens 4 gelangt, wird der Einzugsbolzen 4 nicht nur in die Aufnahmeöffnung 4 eingezogen, bis die untere Auflagefläche 8 des ersten Bauteils 1 zur genauen Positionierung in der Z-Achse zur Anlage auf der oberen Auflagefläche 9 des als Aufspannplatte ausgebildeten zweiten Bauteil 2 gelangt, sondern Einzugsbolzen 4 wird auch seitlich gegen die kreisbogenförmige Anlagefläche 14 gedrückt, so dass gemäß Figur 3 auch in der X- Und Y-Achse eine genaue Positionierung erreicht wird. Durch den Spannmechanismus 5 wird das erste Bauteil 1 somit nicht nur in der Z-Achse, sondern auch in der X- und Y-Achse genau und spielfrei positioniert.

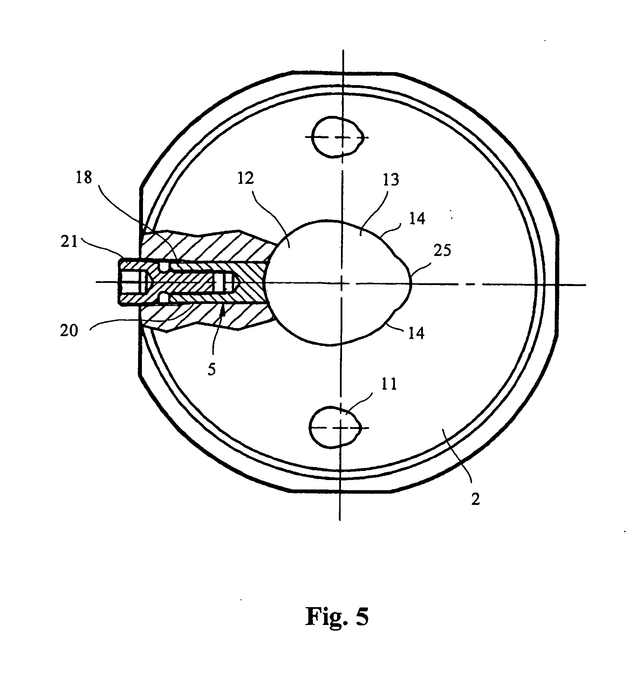

In Figur 5 ist eine alternative Ausführung für die Aufnahmeöffnung im zweiten Bauteil dargestellt. Bei dieser Ausführungsform weist der Aufnahmebereich 13 zwei durch eine zusätzliche Freistellung 25 unterteilte, in der Draufsicht kreisbogenförmige Anlageflächen 14 auf. Es muss also nicht eine durchgängige Anlagefläche vorgesehen sein, sondern der Anlagebereich 13 kann auch durch mehrere durch Freistellungen 25 abgetrennte Anlageflächen 14 gebildet sein. Die segmentartigen Anlageflächen 14 liegen vom Einzugsbolzen 3 gesehen vorzugsweise im bereich von minimal 90 bis 160° und maximal 200 bis 270°. Die restlichen Flächen weisen größere Abmessungen als der Einzugsbolzen 3 auf, damit genügend Spiel für dessen Einführung in die Aufnahmeöffnung zu Verfügung steht. Der Spannmechanismus 5 ist wie bei dem vorstehend beschriebenen Beispiel ausgeführt, so dass einander entsprechende Bauteile auch mit denselben Bezugszeichen versehen sind.

Die Erfindung ist nicht auf die vorstehend beschriebenen Ausführungsbeispiele beschränkt. So können in einer gemeinsamen Aufspannplatte auch mehrere Aufnahmeöffnungen mit einem gemeinsamen Spannmechanismus oder getrennten Spanneinrichtungen vorgesehen sein. Der Spannmechanismus wird dabei in idealer Weise für jeden Einzugsbolzen aus der gleichen Richtung oder zumindest in einem sehr spitzen Winkel betätigt, so dass beim Lösen alle Einzugsbolzen in die größeren Einführbereiche geschoben werden können. Dadurch kann das Be- und Entladen erleichtert werden.

## Patentansprüche

1. Nullpunkt-Spannvorrichtung zum positionsgenauen Festspannen eines ersten Bauteils (1) an einem zweiten Bauteil (2), wobei das erste Bauteil (1) mindestens einen Einzugsbolzen (3) und das zweite Bauteil (2) eine Aufnahmeöffnung (4) für den Einzugsbolzen (3) sowie einen Spannmechanismus (5) zum Einziehen des Einzugsbolzens (3) in die Aufnahmeöffnung (4) enthält und die Aufnahmeöffnung (4) einen Einführbereich (12) mit größeren Außenabmessungen als der Einzugsbolzen (3) enthält, **dadurch gekennzeichnet, dass** die Aufnahmeöffnung (4) einen gegenüber dem Einführbereich (12) radial versetzten Anlagebereich (13) mit mindestens einer in der Draufsicht kreisbogenförmigen Anlagefläche (14) enthält.

2. Nullpunkt-Spannvorrichtung nach Anspruch 1, **dadurch gekennzeichnet, dass** der Anlagebereich (13) zwei oder mehrere durch eine bzw. mehrere Freistellungen (25) abgeteilte Anlageflächen (14) enthält.

3. Nullpunkt-Spannvorrichtung nach Anspruch 1 oder 2, **dadurch gekennzeichnet, dass** der Radius R₂ der kreisbogenförmigen Anlagefläche (8) dem Radius r des Einzugsbolzens (3) entspricht.

4. Nullpunkt-Spannvorrichtung nach einem der Ansprüche 1 bis 3, **dadurch gekennzeichnet, dass** die Aufnahmeöffnung (4) in der Draufsicht oval ist.

5. Nullpunkt-Spannvorrichtung nach einem der Ansprüche 1 bis 4, **dadurch gekennzeichnet, dass** die Aufnahmeöffnung (4) aus radial versetzten Bohrungen mit unterschiedlichem Durchmesser besteht.

6. Nullpunkt-Spannvorrichtung nach einem der Ansprüche 1 bis 5, **dadurch gekennzeichnet, dass** der Einzugsbolzen (3) zylindrische Anlageflächen (15) enthält.

7. Nullpunkt-Spannvorrichtung nach einem der Ansprüche 1 bis 6, **dadurch gekennzeichnet, dass** den Bauteilen (1, 2) eine Verdrehsicherung (10, 11) zugeordnet ist.

8. Nullpunkt-Spannvorrichtung nach Anspruch 7, **dadurch gekennzeichnet, dass** die Verdrehsicherung (10, 11) aus mindestens zwei ovalen Verdrehsicherungsbohrungen (11) in dem einen Bauteil (2) und mindestens zwei zylindrischen Verdrehsicherungsbolzen (10) in dem anderen Bauteil (1) besteht.

9. Nullpunkt-Spannvorrichtung nach einem der Ansprüche 1 bis 8, **dadurch gekennzeichnet, dass** der Spannmechanismus (5) einen quer zu der Aufnahmeöffnung verstellbaren Schieber (18) mit einer Keilfläche (19) zum Eingriff mit einer schrägen Spannfläche (17) einer Keilnut (16) des Einzugsbolzen (3) enthält.

10. Nullpunkt-Spannvorrichtung nach Anspruch 9, **dadurch gekennzeichnet, dass** die Keilfläche (19) konkav ist

11. Nullpunkt-Spannvorrichtung nach Anspruch 9 oder 10, **dadurch gekennzeichnet, dass** der Schieber (12) durch eine Stellschraube (21) verstellbar ist.

12. Nullpunkt-Spannvorrichtung nach Anspruch 11, **dadurch gekennzeichnet, dass** die Stellschraube (21) zwei unterschiedliche Gewindesteigungen (22, 23) enthält.

13. Nullpunkt-Spannvorrichtung nach einem der Ansprüche 9 bis 12, **dadurch gekennzeichnet, dass** der Schieber (18) durch eine Feder in die Lösestellung beaufschlagt ist.

14. Nullpunkt-Spannvorrichtung nach einem der Ansprüche 1 bis 13, **dadurch gekennzeichnet, dass** der Schieber (18) in einer Bohrung (207) des Bauteils (2) verschiebbar geführt und durch eine Sicherungsschraube (24) gesichert ist.

## Claims

1. Zero-point clamping device for clamping a first component (1) securely to a second component (2) in a precise position, the first component (1) comprising at least one drawing-in bolt (3) and the second component (2) a receiving opening (4) for the drawing-in bolt (3) and a clamping mechanism (5) for drawing the drawing-in bolt (3) into the receiving opening (4) and the receiving opening (4) comprising a guiding-in region (12) with larger external dimensions than the drawing-in bolt (3), **characterised in that** the receiving opening (4) comprises a bearing region (13) which is offset radially in relation to the guiding-in region (12) and has at least one bearing face (14) which is the shape of an arc of a circle in plan view.

2. Zero-point clamping device according to claim 1, **characterised in that** the bearing region (13) comprises two or more bearing faces (14) divided by one or more free locations (25).

3. Zero-point clamping device according to claim 1 or 2, **characterised in that** the radius R₂ of the bearing face (8) with the shape of an arc of a circle corresponds to the radius r of the drawing-in bolt (3).

4. Zero-point clamping device according to one of claims 1 to 3, **characterised in that** the receiving opening (4) is oval in plan view.

5. Zero-point clamping device according to one of claims 1 to 4, **characterised in that** the receiving opening (4) consists of radially offset bores with a different diameter.

6. Zero-point clamping device according to one of claims 1 to 5, **characterised in that** the drawing-in bolt (3) comprises cylindrical bearing faces (15).

7. Zero-point clamping device according to one of claims 1 to 6, **characterised in that** the components (1, 2) have an associated anti-torsion device (10, 11).

8. Zero-point clamping device according to claim 7, **characterised in that** the anti-torsion device (10, 11) consists of at least two oval anti-torsion bores (11) in one component (2) and at least two cylindrical anti-torsion bolts (10) in the other component (1).

9. Zero-point clamping device according to one of claims 1 to 8, **characterised in that** the clamping mechanism (5) comprises a slide (18) which is adjustable transversely to the receiving opening and has a wedge face (19) for engagement with an oblique clamping face (17) of a keyway (16) of the drawing-in bolt (3).

10. Zero-point clamping device according to claim 9, **characterised in that** the wedge face (19) is concave.

11. Zero-point clamping device according to claim 9 or 10, **characterised in that** the slide (12) is adjustable by means of an adjusting screw (21).

12. Zero-point clamping device according to claim 11, **characterised in that** the adjusting screw (21) comprises two different thread pitches (22, 23).

13. Zero-point clamping device according to one of claims 9 to 12, **characterised in that** the slide (18) is forced into the releasing position by a spring.

14. Zero-point clamping device according to one of claims 1 to 13, **characterised in that** the slide (18) is guided displaceably in a bore (207) of the component (2) and secured by a locking screw (24).

## Revendications

1. Dispositif de serrage à point zéro servant à serrer un premier élément (1) dans une position précise au niveau d'un deuxième élément (2), sachant que le premier élément (1) comporte au moins un boulon d'insertion (3) et que le deuxième élément (2) comporte un orifice de réception (4) destiné au boulon d'insertion (3) ainsi qu'un mécanisme de serrage (5) servant à insérer le boulon d'insertion (3) dans l'orifice de réception (4) et sachant que l'orifice de réception (4) comporte une zone d'introduction (12) présentant des dimensions extérieures plus grandes que le boulon d'insertion (3), **caractérisé en ce que** l'orifice de réception (4) comporte une zone d'appui (13) décalée radialement par rapport à la zone d'introduction (12) et pourvue d'au moins une surface d'appui (14) présentant une forme d'arc de cercle sur une vue en élévation.

2. Dispositif de serrage à point zéro selon la revendication 1, **caractérisé en ce que** la zone d'appui (13) comporte deux ou plusieurs surfaces d'appui (14) séparées par un ou plusieurs endroits dégagés (25).

3. Dispositif de serrage à point zéro selon la revendication 1 ou 2, **caractérisé en ce que** le rayon R₂ de la surface d'appui (8) présentant une forme d'arc de cercle correspond au rayon r du boulon d'insertion (3).

4. Dispositif de serrage à point zéro selon l'une quelconque des revendications 1 à 3, **caractérisé en ce que** l'orifice de réception (4) est ovale sur la vue en élévation.

5. Dispositif de serrage à point zéro selon l'une quelconque des revendications 1 à 4, **caractérisé en ce que** l'orifice de réception (4) est constitué d'alésages décalés radialement présentant un diamètre différent.

6. Dispositif de serrage à point zéro selon l'une quelconque des revendications 1 à 5, **caractérisé en ce que** le boulon d'insertion (3) comporte des surfaces d'appui (15) cylindriques.

7. Dispositif de serrage à point zéro selon l'une quelconque des revendications 1 à 6, **caractérisé en ce qu'**un système anti-rotation (10, 11) est associé aux éléments (1, 2).

8. Dispositif de serrage à point zéro selon la revendication 7, **caractérisé en ce que** le système anti-rotation (10, 11) est constitué d'au moins deux alésages anti-rotation (11) ovales dans l'un (2) des éléments et d'au moins deux boulons anti-rotation (10) cylindriques dans l'autre élément (1).

9. Dispositif de serrage à point zéro selon l'une quelconque des revendications 1 à 8, **caractérisé en ce que** le mécanisme de serrage (5) comporte un coulisseau (18) pouvant être ajusté de manière transversale par rapport à l'orifice de réception et pourvu d'une surface biseautée (19) destinée à venir en prise avec une surface de serrage (17) oblique d'une rainure biseautée (16) du boulon d'insertion (3).

10. Dispositif de serrage à point zéro selon la revendication 9, **caractérisé en ce que** la surface biseautée (19) est concave.

11. Dispositif de serrage à point zéro selon la revendication 9 ou 10, **caractérisé en ce que** le coulisseau (12) peut être ajusté par une vis de réglage (21).

12. Dispositif de serrage à point zéro selon la revendication 11, **caractérisé en ce que** la vis de réglage (21) comporte deux pas filetés (22, 23) différents.

13. Dispositif de serrage à point zéro selon l'une quelconque des revendications 9 à 12, **caractérisé en ce que** le coulisseau (18) est contraint par un ressort dans la position de déblocage.

14. Dispositif de serrage à point zéro selon l'une quelconque des revendications 1 à 13, **caractérisé en ce que** le coulisseau (18) est guidé dans un alésage (207) de l'élément (2) de manière à pouvoir être déplacé par coulissement et est bloqué par une vis de blocage (24).
